# EUROPEAN PATENT APPLICATION

(11) **EP 3 863 107 A1**
(43) Date of publication of application: **11.08.2021**
(21) Application number: 20191709.3
(22) Date of filing: 19.08.2020
(51) Int. Cl.: H01M 50/105, H01M 50/122, H01M 50/124, H01M 50/136, H01M 50/531, H01M 50/557, H01M 50/584

(54) **COMPOSITE BATTERY AND ELECTRONIC DEVICE**

(30) Priority: 07.02.2020 CN 202091008284 U
(71) Applicant: Beijing Xiaomi Mobile Software Co., Ltd., Beijing 100085 (CN)
(72) Inventor: XU, Zhenhuan, Beijing, Beijing 100085 (CN); LI, Guangyin, Beijing, Beijing 100085 (CN); WANG, Zongqiang, Beijing, Beijing 100085 (CN)
(74) Representative: dompatent von Kreisler Selting Werner - Partnerschaft von Patent- und Rechtsanwälten mbB

(57) **Abstract**

The present disclosure relates to a composite battery and an electronic device. The composite battery includes: an encapsulation film; and a plurality of battery cells that are connected with one another in parallel, and are encapsulated in the encapsulation film.

## Description

### TECHNICAL FIELD

The present disclosure relates to a field of terminal technology, and more particularly to a composite battery and an electronic device.

### BACKGROUND

Since an electronic device may be equipped with increasingly powerful functions, a power consumption of the electronic device may be increasing, thus raising a higher requirement for a battery capacity of the electronic device.

### SUMMARY

The present disclosure provides a composite battery and an electronic device.

According to a first aspect of the present disclosure, a composite battery is provided. The composite battery may include: an encapsulation film; and a plurality of battery cells that may be connected in parallel with one another and may be encapsulated in the encapsulation film.

In some embodiments, the plurality of battery cells are arranged in the encapsulation film side by side.

In some embodiments, the plurality of battery cells include a first battery cell and a second battery cell that are arranged adjacent to each other, and each of the first battery cell and the second battery cell includes a positive tab and a negative tab. The composite battery further includes: a common tab that is connected to adjacent tabs of a same polarity on the first battery cell and the second battery cell; and a battery protection plate that is connected to the common tab.

In some embodiments, the common tab includes: a connection portion that is connected to the adjacent tabs of the same polarity on the first battery cell and the second battery cell; and a welding portion that is connected to the connection portion and the battery protection plate.

In some embodiments, the adjacent tabs of the same polarity on the first battery cell and the second battery cell are bent in a depth direction of the composite battery.

In some embodiments, the welding portion includes: a first part that is arranged along the depth direction of the composite battery; and a second part that is bent relative to the first part, and is connected to the battery protection plate, wherein an extending direction of the second part is in a length direction of the composite battery.

In some embodiments, the composite battery further includes an insulation layer covering parts of the connection portion and the welding portion.

In some embodiments, lengths of the plurality of battery cells are identical or different.

In some embodiments, a length of at least one battery cell of the plurality of battery cells is larger than or equal to twice of a width of the at least one battery cell.

In some embodiments, the encapsulation film includes an aluminum plastic film, the plurality of battery cells are arranged in the encapsulation film side by side, and the encapsulation film is arranged in an arc shape at a transition of the plurality of battery cells.

According to a second aspect of the present disclosure, an electronic device is provided. The electronic device may include the composite battery according to any one of the above embodiments.

The technical solution provided by the embodiments of the present disclosure may include following beneficial effects.

As can be seen from the above embodiments, the composite battery in the present disclosure can encapsulate the plurality of battery cells through the same encapsulation film. Compared with the technical solutions in the related art, the number of folded edges formed by the encapsulation film in the present disclosure is reduced, thus effectively reducing a space occupation in the electronic device, improving a space utilization rate and enhancing an energy density.

It is to be understood that both the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of this specification, illustrate examples consistent with the present disclosure and, together with the description, serve to explain the principles of the invention.
Fig. 1 is a schematic view of a composite battery.
Fig. 2 is a schematic view of a composite battery according to an example of the present disclosure.
Fig. 3 is a schematic view of a composite battery according to an example of the present disclosure.
Fig. 4 is a schematic view of a composite battery according to an example of the present disclosure.
Fig. 5 is a schematic view of a composite battery according to an example of the present disclosure.
Fig. 6 is a top view of a composite battery according to an example of the present disclosure.
Fig. 7 is a schematic view of a composite battery according to an example of the present disclosure.
Fig. 8 is a schematic view of a composite battery according to an example of the present disclosure.
Fig. 9 is a top view of a composite battery according to another example of the present disclosure.

### DETAILED DESCRIPTION

Reference will be made in detail to examples, examples of which are illustrated in the accompanying drawings. The following description refers to the accompanying drawings in which the same numbers in different drawings represent the same or similar elements unless otherwise represented. The implementations set forth in the following description of examples do not represent all implementations consistent with the present disclosure. Instead, they are merely examples of apparatuses and methods consistent with aspects related to the present disclosure.

The terms used in the present disclosure are merely for the purpose of describing examples, but not intended to limit the present disclosure. As used in the descriptions and the appended claims of the present disclosure, "a" and "the" in singular forms mean including plural forms, unless clearly indicated in the context otherwise. It should also be understood that, as used herein, the term "and/or" represents and contains any and all possible combinations of one or more associated listed items.

It should be understood that, although terms such as first, second and third may be used herein for describing various kinds of information in the present disclosure, such information should not be limited to these terms. These terms are only used for distinguishing the same type of information from each other. For example, without departing from the scope of the present disclosure, a first information may also be called as a second information, and similarly, the second information may also be called as the first information. Depending on the context, the term "if' used herein may be construed to mean "when" or "upon" or "in response to determining".

Since an electronic device may be equipped with increasingly powerful functions disposed, a power consumption of the electronic device may be increasing, thus raising a higher requirement for a battery capacity of the electronic device. Thus, in order to enhance a battery life of the electronic device, the designers can propose a solution of placing a plurality of independent batteries in the electronic device.

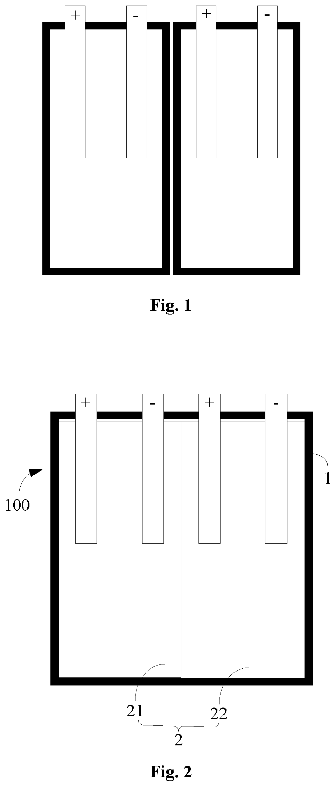

As illustrated in Fig. 1, the plurality of batteries may be placed side by side in the electronic device, and the plurality of batteries may supply power to the electronic device in parallel or in series. However, in some implementations, since each battery is an independent unit, each battery has its own folded edge structure (a black bold part in Fig. 1). Thus, a composite battery formed by the plurality of batteries has a plurality of folded edges in various directions, thereby occupying an internal space of the electronic device, which is not conducive to improving an energy density and a battery capacity of the composite battery.

As illustrated in Fig. 2, the present disclosure provides a composite battery 100, and the composite battery 100 includes an encapsulation film 1 and a plurality of battery cells 2. The plurality of battery cells 2 are connected in parallel with one another, so as to reduce an internal resistance of the composite battery 100 and improve a charging efficiency of the composite battery 100. Further, the plurality of battery cells 2 may be encapsulated in the same encapsulation film 1. For example, as illustrated in Fig. 2, the plurality of battery cells 2 includes a first battery cell 21 and a second battery cell 22, both the first battery cell 21 and the second battery cell 22 are encapsulated in the encapsulation film 1, such that when the first battery cell 21 and the second battery cell 22 are encapsulated to obtain the composite battery 100, compared with the example in Fig. 1, the number of folded edges formed by the encapsulation film 1 in the present disclosure is reduced, thus effectively reducing a space occupation in the electronic device, improving a space utilization rate and increasing an energy density.

In this example, the plurality of battery cells may be arranged in a plurality of ways. For example, the plurality of battery cells may be arranged in a stack, or may also be arranged perpendicular to one another, or as illustrated in Fig. 1, may also be arranged side by side in the same encapsulation film 1. The arrangement may be designed according to requirements, which is not limited in the present disclosure.

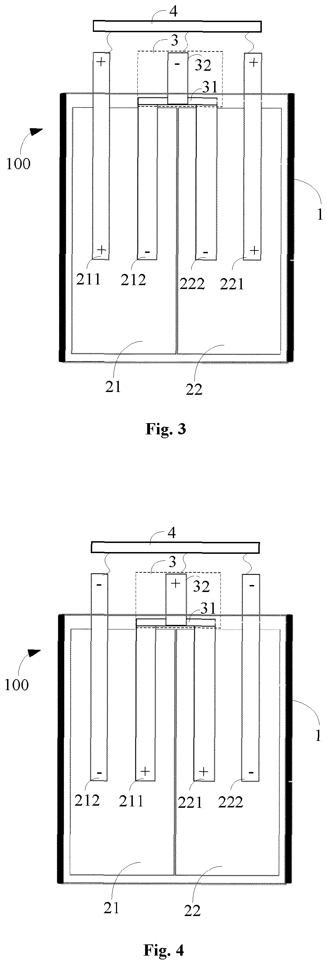

Based on the solution that the plurality of battery cells are arranged shoulder by shoulder and side by side, as illustrated in Fig. 3, still taking the composite battery 100 including the first battery cell 21 and the second battery cell 22 as an example, each of the first battery cell 21 and the second battery cell 22 may include a positive tab and a negative tab. As illustrated in Fig. 3, the first battery cell 21 includes a positive tab 211 and a negative tab 212, and the second battery cell 22 includes a positive tab 221 and a negative tab 222. Further, the composite battery 100 also includes a common tab 3 and a battery protection plate 4. The adjacent tabs of the same polarity on the first battery cell 21 and the second battery cell 22 may be connected to the same common tab 3, and the common tab 3 is further connected to the battery protection plate 4.

For example, as illustrated in Fig. 3, the negative tab 212 of the first battery cell 21 and the negative tab 222 of the second battery cell 22 are both connected to the common tab 3, and the common tab 3 is connected to the battery protection plate 4. In addition, the positive tab 211 of the first battery cell 21 and the positive tab 221 of the second battery cell 22 are connected to the battery protection plate 4, respectively. In this way, compared with a technical solution of the example illustrated in Fig. 2, the number of the tabs connected to the battery protection plate 4 is reduced, thus reducing the requirements for the number of welding regions on the battery protection plate 4, and for the area of the battery protection plate 4, which is especially suitable for an application scenario where a plurality of electronic elements need to be arranged on the battery protection plate 4.

In the example illustrated in Fig. 3, descriptions are made by taking an example that the negative tab 212 of the first battery cell 21 and the negative tab 222 of the second battery cell 22 are connected to the same common tab 3, and the positive tab 211 of the first battery cell 21 and the positive tab 221 of the second battery cell 22 are connected to the battery protection plate 4, respectively. In other examples, as illustrated in Fig. 4, the positive tab 211 of the first battery cell 21 and the positive tab 221 of the second battery cell 22 may also be connected to the same common tab 3, and the negative tab 212 of the first battery cell 21 and the negative tab 222 of the second battery cell 22 are connected to the battery protection plate 4, respectively.

For the example in Fig. 3, still as illustrated in Fig. 3 and Fig. 4, the common tab 3 includes a connection portion 31 and a welding portion 32. The connection portion 21 is configured to be connected with the adjacent tabs of the same polarity on the first battery cell 21 and the second battery cell 22, the welding portion 32 is connected to the connection portion 31, and the welding portion 32 is further welded with the battery protection plate 4, so as to achieve an electric connection. For example, as illustrated in Fig. 3, the negative tab 212 of the first battery cell 21 and the negative tab 222 of the second battery cell 22 are connected to the connection portion 31 of the same material, and further connected to the battery protection plate 4 through the welding portion 32. As illustrated in Fig. 4, the positive tab 211 of the first battery cell 21 and the positive tab 221 of the second battery cell 22 are connected to the connection portion 31 of the same material, and further connected to the battery protection plate 4 through the welding portion 32.

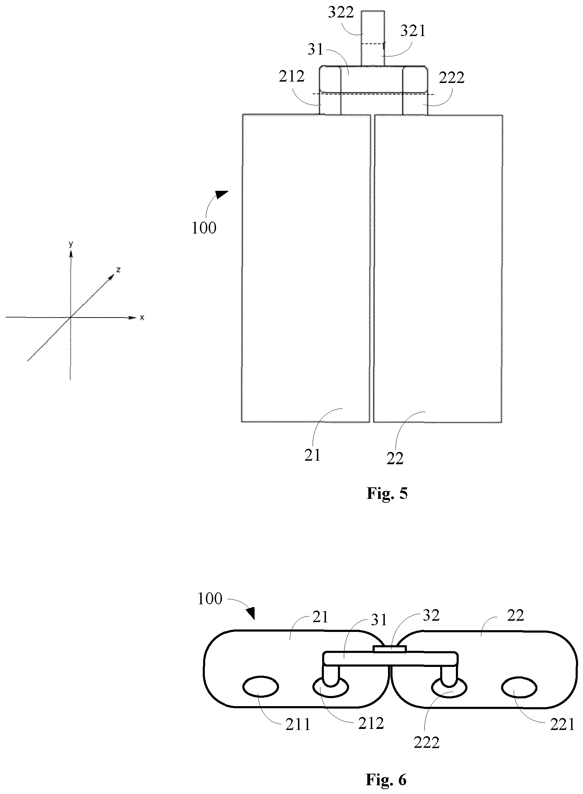

In the above examples, in order to further reduce the space occupied by a protruding part of the tab on the battery cell 2, taking an example that the negative tab 212 of the first battery cell 21 and the negative tab 222 of the second battery cell 22 are connected to the same common tab 3, the negative tab 212 of the first battery cell 21 and the negative tab 222 of the second battery cell 22 may switch to a state illustrated in Fig. 6 from an extended state illustrated in Fig. 5 after being bent in a depth direction of the composite battery 100 along the dotted line shown in Fig. 5. In Fig. 5, the X axis corresponds to the width direction, Y axis corresponds to the length direction and Z axis corresponds to the depth direction (depth direction is not shown in Fig. 5). After the negative tab 212 and the negative tab 222 are bent down in the depth direction of the battery body 100, the connection portion 31 of the common tab 3 is connected to the bent negative tab 212 and the bent negative tab 222. On one hand, a welding area of the connection portion 31 with the negative tab 212 and negative tab 222 can be increased, so as to improve the stability of connection. On the other hand, the requirements for the space in a length direction of the composite battery 100, the length of the protrusion of the negative tab 212 and the negative table 222, may be reduced. Thus the space utilization rate is improved. The negative tab 212 and the negative tab 222 may be welded with the connection portion 31 after the negative tab 212 and the negative tab 222 are bent, or alternatively, the connection portion 31 is welded with the negative tab 212 and the negative tab 222 at the surfaces of the negative tab 212 and the negative tab 222 that are perpendicular to the depth direction of the battery body 100, and then the negative tab 212 and the negative tab 222 are bent in the depth direction of the composite battery 100.

Further, in order to enable the common tab 3, the positive tab 211 of the first battery cell 21 and the positive tab 221 to be connected to the battery protection plate 4 along the same direction so as to reduce the process difficulty, as illustrated in Fig. 5, the welding portion 32 also includes a first part 321 and a second part 322 bent relative to the first part 321. The first part 321 is arranged along the depth direction of the composite battery 100, an extending direction of the second part 322 is the same with the length direction of the composite battery 100, and the second part 322 is connected to the battery protection plate 4.

Based on the above examples, since the common tab 3 is added in the technical solution of the present disclosure, a length of a conductive wire is prolonged. In order to reduce a risk of short circuit of the composite battery 100, the composite battery 100 may also include an insulation layer (not illustrated), and the insulation layer covers parts of the connection portion 31 and the welding portion 32, and only exposes other parts of the connection portion 31 and the welding portion 32 for welding.

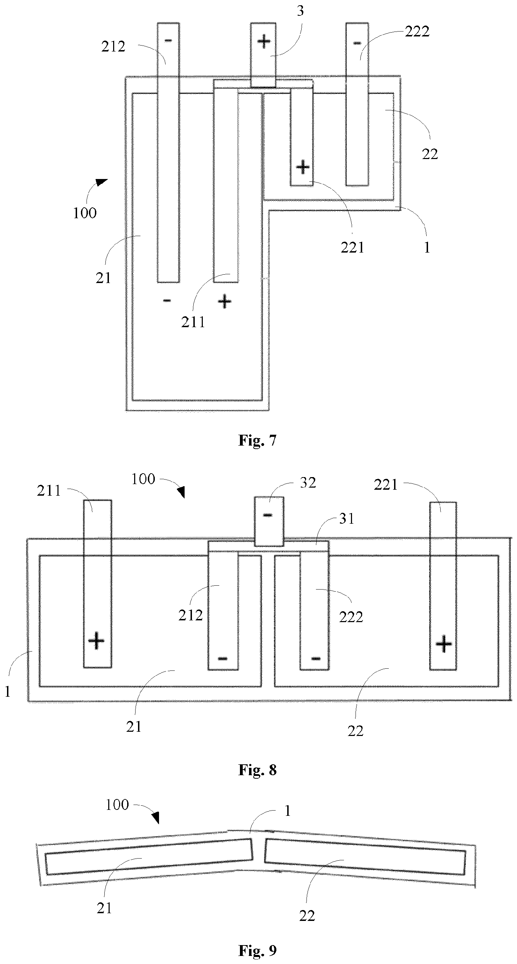

Based on the technical solution of the present disclosure, as illustrated in the examples of Figs. 2-5, the plurality of battery cells included in the composite battery 100 may have the same length, or, as illustrated in Fig. 7, the plurality of battery cells included in the composite battery 100 may also have different lengths, which is not limited in the present disclosure. Moreover, the length of at least one battery cell of the plurality of battery cells is larger than or equal to twice of the width of the at least one battery cell. That is, the at least one battery cell adopts a narrow strip shape, thus reducing an internal resistance of the composite battery 100.

In the above examples, as illustrated in Fig. 8 and Fig. 9, the encapsulation film 1 may include an aluminum plastic film. By means of the characteristics that the aluminum plastic film has a certain toughness, as illustrated in Fig. 9, the encapsulation film 1 may be processed to be arranged in an arc shape at a transition of at least one group of adjacent battery cells of the plurality of battery cells arranged side by side, so as to adapt to an application scenario of the electronic device, such as virtual reality glasses, a wearable device or the like.

The present disclosure may include dedicated hardware implementations such as application specific integrated circuits, programmable logic arrays and other hardware devices. The hardware implementations can be constructed to implement one or more of the methods described herein. Examples that may include the apparatus and systems of various implementations can broadly include a variety of electronic and computing systems. One or more examples described herein may implement functions using two or more specific interconnected hardware modules or devices with related control and data signals that can be communicated between and through the modules, or as portions of an application-specific integrated circuit. Accordingly, the system disclosed may encompass software, firmware, and hardware implementations. The terms "module," "sub-module," "circuit," "sub-circuit," "circuitry," "sub-circuitry," "unit," or "sub-unit" may include memory (shared, dedicated, or group) that stores code or instructions that can be executed by one or more processors. The module refers herein may include one or more circuit with or without stored code or instructions. The module or circuit may include one or more components that are connected.

Other examples of the present disclosure will be apparent to those skilled in the art from consideration of the specification and practice of the technical solutions disclosed here. This present disclosure is intended to cover any variations, uses, or adaptations of the present disclosure following the general principles thereof and including such departures from the present disclosure as come within known or customary practice in the art. It is intended that the specification and examples be considered as exemplary only.

It will be appreciated that the present disclosure is not limited to the exact construction that has been described above and illustrated in the accompanying drawings, and that various modifications and changes can be made without departing from the scope thereof.

## Claims

1. A composite battery (100), comprising:
an encapsulation film (1);
a plurality of battery cells (2) that are connected in parallel with one another and are encapsulated in the encapsulation film (1).

2. The composite battery (100) according to claim 1, wherein the plurality of battery cells (2) are arranged in the encapsulation film (1) side by side.

3. The composite battery (100) according to claim 2, wherein:
the plurality of battery cells (2) comprise a first battery cell (21) and a second battery cell (22) that are arranged adjacent to each other, and each of the first battery cell (21) and the second battery cell (22) comprises a positive tab (211, 212) and a negative tab (212, 222); and
the composite battery (100) further comprises:
a common tab (3) that is connected to adjacent tabs of the same polarity on the first battery cell (21) and the second battery cell (22); and
a battery protection plate (4) that is connected to the common tab (3).

4. The composite battery (100) according to claim 3, wherein the common tab (3) comprises:
a connection portion (31) that is connected with the adjacent tabs of the same polarity on the first battery cell (21) and the second battery cell (22); and
a welding portion (32) that is connected to the connection portion (31) and the battery protection plate (4).

5. The composite battery (100) according to claim 4, wherein the adjacent tabs of the same polarity on the first battery cell (21) and the second battery cell (22) are bent in a depth direction of the composite battery (100).

6. The composite battery (100) according to claim 5, wherein the welding portion (32) comprises:
a first part (321) that is arranged along the depth direction of the composite battery (100); and
a second part (322) that is bent relative to the first part (321), and is connected to the battery protection plate (4), wherein an extending direction of the second part (322) is in a length direction of the composite battery (100).

7. The composite battery (100) according to any one of claims 4-6, further comprising an insulation layer covering parts of the connection portion (31) and the welding portion (32).

8. The composite battery (100) according to any one of claims 1-7, wherein the lengths of the plurality of battery cells (2) are identical or different.

9. The composite battery (100) according to any one of claims 1-7, wherein the length of at least one battery cell of the plurality of battery cells (2) is larger than or equal to twice of a width of the at least one battery cell.

10. The composite battery (100) according to any one of claims 1-9, wherein the encapsulation film (1) comprises an aluminum plastic film, the plurality of battery cells (2) are arranged in the encapsulation film (1) side by side, and the encapsulation film (1) is arranged in an arc shape at a transition of the plurality of battery cells (2).

11. An electronic device, comprising a composite battery (100) according to any one of claims 1-10.
